# EUROPÄISCHE PATENTSCHRIFT

(11) **EP 3 243 154 B1**
(45) Veröffentlichungstag und Bekanntmachung des Hinweises auf die Patenterteilung: **15.12.2021**
(21) Anmeldenummer: 16700284.9
(22) Anmeldetag: 07.01.2016
(51) Int. Cl.: G06F 21/31

(54) **VERFAHREN ZUM SICHEREN BETREIBEN EINER COMPUTEREINHEIT, SOFTWAREAPPLIKATION UND COMPUTEREINHEIT**
METHOD FOR SECURE OPERATION OF A COMPUTER UNIT, SOFTWARE APPLICATION AND COMPUTER UNIT
PROCÉDÉ DE FONCTIONNEMENT SÛR D'UNE UNITE INFORMATIQUE, APPLICATION LOGICIELLE ET UNITÉ INFORMATIQUE

(30) Priorität: 08.01.2015 DE 102015000220
(43) Veröffentlichungstag der Anmeldung: 15.11.2017
(73) Patentinhaber: Giesecke+Devrient Mobile Security GmbH, 81677 München (DE)
(72) Erfinder: SCHÄFER, Frank, 82178 Puchheim (DE)
(74) Vertreter: Giesecke + Devrient IP
(86) Internationale Anmeldenummer: PCT/EP2016/000020
(87) Internationale Veröffentlichungsnummer: WO 2016/110452

(56) Entgegenhaltungen:
- US-A1- 2003 079 122
- US-A1- 2006 156 028
- US-A1- 2013 346 757
- "iOS Security Contents", , 2. Oktober 2014 (2014-10-02), XP055145007, Gefunden im Internet: URL:http://images.apple.com/privacy/docs/i OS_Security_Guide_Oct_2014.pdf [gefunden am 2016-03-12]

## Beschreibung

### Gebiet der Erfindung

Die Erfindung betrifft ein Verfahren zum sicheren Betreiben einer Computereinheit mit einer Softwareapplikation sowie eine solche Softwareapplikation und eine solche Computereinheit. Insbesondere betrifft die Erfindung ein Verfahren zum sicheren Betreiben eines mobilen Endgeräts mit einer Softwareapplikation sowie eine solche Softwareapplikation und ein solches mobiles Endgerät.

### Hintergrund der Erfindung

Mehr und mehr werden mobile Endgeräte in Form von Smartphones dazu verwendet, digitale Transaktionen durchzuführen, beispielsweise zum bargeldlosen Bezahlen an einem NFC-Terminal oder zum Kauf einer Ware oder einer Dienstleistung bei einem Online-Versandhändler. Bei der Durchführung einer solchen digitalen Transaktion interagiert in der Regel eine auf dem Smartphone implementierte Softwareapplikation (kurz "App" genannt) mit einem Terminal bzw. Server. Die Softwareapplikation ist üblicherweise dadurch gesichert, dass sich der Benutzer zum Starten der Softwareapplikation und/oder zur Durchführung der digitalen Transaktion mittels einer PIN oder einem anderen Authentifizierungsmittel gegenüber dem mobilen Endgerät bzw. dem Server authentifizieren muss. Häufig ist ein kryptographischer Algorithmus, z.B. ein Verschlüsselungsalgorithmus, Teil der auf dem mobilen Endgerät implementierten Softwareapplikation, die auf sicherheitskritische Daten, z.B. PINs, Passwörter, Schlüssel etc., zugreift. In der Vergangenheit sind sicherheitskritische Daten in der Regel auf einem eigenständigen Sicherheitselement des mobilen Endgeräts häufig in Form einer aus dem mobilen Endgerät herausnehmbaren SIM-Karte hinterlegt worden, um diese vor einem Angriff durch unbefugte Person zu schützen.

Ein neuerer Ansatz, der insbesondere bei der Durchführung von digitalen Transaktionen mit einem mobilen Endgerät vorteilhaft eingesetzt werden kann, das kein eigenständiges Hardware-Sicherheitselement zum sicheren Speichern von sicherheitskritischen Daten aufweist, basiert auf der Idee, Applikationen mittels Softwaremaßnahmen zu schützen, beispielsweise indem sicherheitskritische Daten derart in dem Programmcode einer Applikation verborgen werden, dass diese für einen Angreifer nicht extrahierbar sind.

Ein solcher Ansatz mit einem Software-Sicherheitselement weist jedoch eine Sicherheitslücke auf. Möchte ein Angreifer beispielsweise die PIN zum Freischalten bzw. zum Durchführen einer digitalen Transaktion mittels der Softwareapplikation herausfinden kann er folgendermaßen vorgehen. Vor der PIN-Abfrage durch die Softwareapplikation wird der aktuelle Zustand des mobilen Endgeräts eingefroren, indem ein Speicherabbild ("Image") erstellt und gespeichert wird. Dann probiert der Angreifer in Reaktion auf die PIN-Abfrage eine erste PIN aus. Falls der Zugang zur Softwareapplikation aufgrund einer vom Angreifer ausprobierten falschen PIN nicht freigegeben wird, kann der Angreifer das vor der PIN-Abfrage erstellte Speicherabbild wieder auf dem mobilen Endgerät einspielen und eine neue PIN ausprobieren, solange bis die richtige PIN erraten worden ist und der Zugang zu der PIN-geschützten Softwareapplikation freigeschaltet worden ist.

Der Fachmann wird erkennen, dass ein in Software implementierter PIN-Fehlbedienungszähler, wie dieser von Hardware-Sicherheitselementen bekannt ist, um bei einer vordefinierten Anzahl von falschen PIN-Eingaben das Sicherheitselement zu sperren, bei dem vorstehend beschriebenen Angriff wirkungslos wäre, da beim erneuten Einspielen des Speicherabbildes auf dem mobilen Endgerät ein in Software implementierter Fehlbedienungszähler jedes Mal wieder auf den Wert zurückgesetzt wird, den er vor der PIN-Abfrage hatte.

Vor diesem Hintergrund stellt sich die Aufgabe, ein verbessertes Verfahren zum Betreiben einer Computereinheit, vorzugweise in Form eines mobilen Endgeräts, sowie eine solche Computereinheit, vorzugsweise in Form eines mobilen Endgeräts, bereitzustellen, bei denen der vorstehend beschriebene Angriff verhindert werden kann.

Das Dokument US2006156028A1 aus dem Stand der Technik offenbart ein Verfahren zum Betreiben einer Computereinheit sowie eine Softwareeinheit gemäß den unabhängigen Ansprüchen 1 und 5. Genauer wird beim in US2006156028A1 offenbarten Verfahren, nachdem bei einer Authentisierung durch Eingabe eines PIN Codes der PIN Code eine festgelegte Anzahl Male falsch eingegeben wurde, die Computereinheit ausgeschaltet. Wenn danach die Computereinheit wieder eingeschaltet wird, wird zur Authentisierung Eingabe eines Fingerabdrucks gefordert (Abstract).

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen angegeben.

Gemäß einem ersten Aspekt der Erfindung wird ein Verfahren zum Betreiben einer Computereinheit mit einem Prozessor bereitgestellt, auf dem eine Softwareapplikation laufen kann. Dass die Softwareapplikation auf dem Prozessor laufen kann, wird dadurch erreicht, dass die Software-Applikation so in der Computereinheit implementiert ist, dass sie, wenn sie zum Laufen gebracht wird, auf dem Prozessor läuft. Dabei umfasst das Verfahren die folgenden Schritte: beim Aufrufen der Softwareapplikation oder beim Durchführen einer Transaktion mit der Softwareapplikation auf der Computereinheit, den Schritt des Überprüfens, ob die Computereinheit seit dem letzten Aufrufen der Softwareapplikation neu gestartet worden ist; das Durchführen einer ersten Form von Authentifizierung zum Starten der Softwareapplikation oder zum Durchführen der Transaktion mit der Softwareapplikation, falls die Computereinheit seit dem letzten Aufrufen der Softwareapplikation nicht neu gestartet worden ist; und das Durchführen einer zweiten Form von Authentifizierung zum Starten der Softwareapplikation oder zum Durchführen der Transaktion mit der Softwareapplikation, falls die Computereinheit seit dem letzten Aufrufen der Softwareapplikation neu gestartet worden ist.

Erfindungsgemäß ist die Softwareapplikation dazu ausgestaltet, beim Aufrufen der Softwareapplikation auf der Computereinheit zu überprüfen, ob die Computereinheit seit dem letzten Aufrufen der Softwareapplikation neu gestartet worden ist, indem: ein Broadcast-Mechanismus auf der Computereinheit eingerichtet ist, der nach einem Neustart der Computereinheit die beim Broadcast-Mechanismus registrierte Softwareapplikation über den Neustart der Computereinheit informiert; und/oder die Softwareapplikation derart ausgestaltet ist, dass diese beim erstmaligen Aufrufen der Software-applikation einen Service startet, der im Betrieb des mobilen Endgeräts nie beendet wird, und dass überprüft werden kann, ob der Service läuft oder nicht.

Bei dem oben beschriebenen Angriff wird ein Speicherabbild ("Image") über den aktuellen Zustand einer Computereinheit, das vor einer PIN-Abfrage durch eine Softwareapplikation der Computereinheit erstellt und gespeichert worden ist, nach der PIN-Abfrage wieder in die Computereinheit eingespielt. Um mit dem neu eingespielten Image eine neue PIN-Abfrage durchführen zu können, muss die Computereinheit neu gestartet werden. Mit der Erfindung wird ein solcher Neustart der Computereinheit erkannt, als Verdachtsmoment für einen Angriff interpretiert, und als Auslöser für eine modifizierte Form der Authentisierung eingesetzt. Somit kann die Computereinheit einen möglicherweise erfolgten Angriff mit einer modifizierten Form von Authentisierung abfangen und beispielsweise bedarfsweise weitere PIN-Abfragen unterbinden.

Gemäß bevorzugter Ausführungsformen der Erfindung ist von einem Sicherheitsstandpunkt die zweite Form von Authentifizierung stärker als die erste Form von Authentifizierung.

Vorzugsweise umfasst die erste Form von Authentifizierung die Eingabe einer PIN oder eines Passwortes.

Die zweite Form der Authentifizierung kann wahlweise die Eingabe einer längeren PIN oder eines sichereren Passwortes umfassen. Gemäß bevorzugten Ausführungsformen der Erfindung umfasst die zweite Form von Authentifizierung eine Authentifizierung gegenüber einem gesonderten Hardware-Element, z.B. einem Cloud-Server und/oder eine Authentifizierung mittels eines Hardware-Tokens, vorzugsweise einer Smart-Card. Indem für die zweite Form der Authentifizierung ein zusätzliches Hardware-Element (z.B. Cloud-Server oder Hardware-Token (insb. Smart Card)) eingebunden wird, wird im Fall eines möglicherweise erfolgten Angriffs das Sicherheitslevel der Authentisierung erhöht.

Vorzugsweise wird überprüft, ob die Computereinheit seit dem letzten Aufrufen der Softwareapplikation neu gestartet worden ist, indem: die Softwareapplikation erkennt, falls diese nach einem Neustart der Computereinheit aufgerufen wird; ein Broadcast-Mechanismus auf der Computereinheit eingerichtet ist, der nach einem Neustart der Computereinheit die beim Broadcast-Mechanismus registrierte Softwareapplikation über den Neustart der Computereinheit informiert; und/oder die Softwareapplikation derart ausgestaltet ist, dass diese beim erstmaligen Aufrufen der Softwareapplikation einen Service startet, der im Betrieb des mobilen Endgeräts nie beendet wird, und dass überprüft werden kann, ob der Service läuft oder nicht.

Gemäß einem zweiten Aspekt der Erfindung wird eine Softwareapplikation bereitgestellt, die dazu ausgestaltet ist, auf dem Prozessor einer Computereinheit zu laufen. Dabei ist die Softwareapplikation ferner dazu ausgestaltet: beim Aufrufen der Softwareapplikation oder beim Durchführen einer Transaktion mit der Softwareapplikation auf der Computereinheit zu überprüfen, ob die Computereinheit seit dem letzten Aufrufen der Software-applikation neu gestartet worden ist; eine erste Form von Authentifizierung zum Starten der Softwareapplikation oder zum Durchführen der Transaktion mit der Softwareapplikation zu verlangen, falls die Computereinheit seit dem letzten Aufrufen der Softwareapplikation nicht neu gestartet worden ist; und eine zweite Form von Authentifizierung zum Starten der Software-applikation oder zum Durchführen der Transaktion mit der Softwareapplikation zu verlangen, falls die Computereinheit seit dem letzten Aufrufen der Softwareapplikation neu gestartet worden ist.

Gemäß bevorzugten Ausführungsformen der Erfindung ist von einem Sicherheitsstandpunkt aus die zweite Form von Authentifizierung stärker als die erste Form von Authentifizierung.

Vorzugsweise umfasst die erste Form von Authentifizierung die Eingabe einer PIN oder eines Passwortes.

Gemäß bevorzugter Ausführungsformen der Erfindung umfasst die zweite Form von Authentifizierung eine Authentifizierung gegenüber einem Cloud-Server und/oder eine Authentifizierung mittels eines Hardware-Tokens, vorzugsweise einer Smart-Card.

Gemäß einem dritten Aspekt der Erfindung wird eine Computereinheit mit einem Prozessor bereitgestellt, auf dem eine Softwareapplikation laufen kann, wobei die Computereinheit dazu ausgestaltet ist, nach einem Verfahren gemäß dem ersten Aspekt der Erfindung betrieben zu werden.

Gemäß einem vierten Aspekt der Erfindung wird eine Computereinheit mit einem Prozessor bereitgestellt, auf dem eine Softwareapplikation gemäß dem zweiten Aspekt der Erfindung läuft.

Vorzugsweise ist die Computereinheit gemäß dem dritten oder dem vierten Aspekt der Erfindung als ein mobiles Endgerät, vorzugsweise als ein Smartphone, ausgestaltet.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnung verwiesen, in der zeigt:

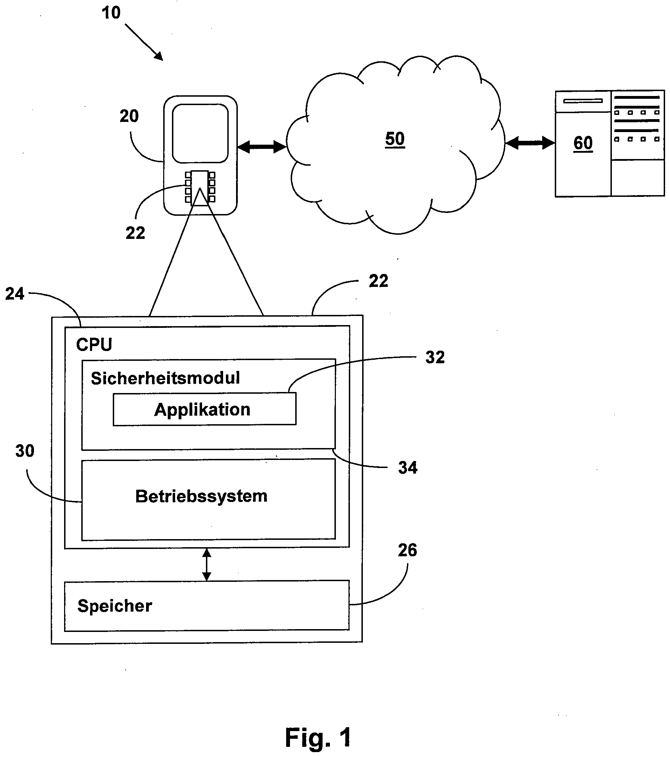

- Fig. 1: eine schematische Darstellung eines Kommunikationssystems mit einer Computereinheit in Form eines Mobiltelefons, bei dem die vorliegende Erfindung vorteilhaft eingesetzt werden.

Figur 1 zeigt eine schematische Darstellung eines beispielhaften Kommunikationssystems 10, bei dem die Erfindung vorteilhaft zum Einsatz kommen kann. Das Kommunikationssystem 10 umfasst eine Computereinheit 20 in Form eines mobilen Endgeräts, vorzugsweise in Form eines Smartphones bzw. Mobiltelefons. Das mobile Endgerät 20 ist dazu ausgestaltet, über einen Kommunikationskanal 50 mit einem Server bzw. einem Terminal 60 zu kommunizieren. Bei dem Kommunikationskanal 50 kann es sich beispielsweise um das Internet, ein Mobilfunknetzwerk, einen NFC-Kanal oder dergleichen handeln. Der Server 60 ist beispielsweise als ein NFC-Terminal eines Service-Anbieters gestaltet, mit dem eine Softwareapplikation, beispielsweise die Softwareapplikation 32, auf dem mobilen Endgerät 20 Transaktionen durchführen kann, z.B. eine Payment-Transaktion, bei dem die Softwareapplikation auf dem mobilen Endgerät 20 einen Bezahlvorgang abwickelt.

Das mobile Endgerät 20 verfügt über einen Chip 22 mit einer zentralen Verarbeitungseinheit ("central processing unit"; CPU) beispielsweise in Form eines Mikroprozessors 24. Zu den primären Aufgaben des Prozessors 24 gehören das Ausführen von arithmetischen und logischen Funktionen und das Lesen und Schreiben von Datenelementen, gemäß dem Programmcode einer auf dem Prozessor 24 ablaufenden Softwareapplikation. Der Übersichtlichkeit halber ist eine bevorzugte Architektur des Chips 22 in Figur 1 außerhalb des mobilen Endgeräts 20 noch einmal schematisch im Detail dargestellt.

Der Prozessor 24 steht in Kommunikationsverbindung mit einer Speichereinheit 26, die vorzugsweise einen flüchtigen Arbeitsspeicher (RAM) beispielsweise zur Aufnahme des Programmcodes einer von dem Prozessor 24 auszuführenden Softwareapplikation umfasst. Vorzugsweise umfasst die Speichereinheit 26 ferner einen nichtflüchtigen, vorzugsweise wieder beschreibbaren Speicher, um beispielsweise im unbestromten Zustand des mobilen Endgeräts 20 den Programmcode einer von dem Prozessor 24 auszuführenden Softwareapplikation aufzunehmen. Vorzugsweise handelt es sich bei dem nichtflüchtigen, wieder beschreibbaren Speicher um einen Flash-Speicher (Flash-EEPROM). Dabei kann es sich beispielsweise um einen Flash-Speicher mit einer NAND- oder einer NOR-Architektur handeln. Selbstverständlich kann die Speichereinheit 26 auch einen Festwertspeicher ("read only memory"; ROM) umfassen.

Wie in Figur 1 schematisch dargestellt ist, ist in dem Prozessor 24 zur Laufzeit ein Betriebssystem 30 derart implementiert, dass die Softwareapplikation 32, beispielsweise eine Payment-Applikation, auf die vom Betriebssystem 30 bereitgestellten Funktionen zugreifen kann, wie beispielsweise ein Dateisystem. Erfindungsgemäß ist zur Laufzeit auf dem Prozessor 24 ferner ein in Software implementiertes Sicherheitsmodul 34 vorhanden, das die Interaktion mit der Softwareapplikation 32 absichert. Der Programmcode des Betriebssystems, 30, der Softwareapplikation 32 und/oder des in Software implementierten Sicherheitsmoduls 34 kann dabei in einem nichtflüchtigen Bereich der Speichereinheit 26 hinterlegt sein.

Erfindungsgemäß ist das Sicherheitsmodul 34 dazu ausgestaltet, den folgenden Sicherheitsmechanismus zu implementieren. Im normalen Betrieb erfordert das Durchführen einer Aktion mit der Softwareapplikation 32, z.B. das Zugreifen auf die Softwareapplikation und/oder das Bestätigen einer mit der Softwareapplikation 32 durchzuführenden elektronischen Transaktion, eine erste Form von Authentifizierung durch den Benutzer, vorzugsweise die Eingabe einer PIN. Falls jedoch detektiert worden ist, dass das mobile Endgerät 20 neu gestartet worden ist, verlangt das Sicherheitsmodul 34 bzw. die Softwareapplikation 32 eine zweite Form von Authentifizierung. Vorzugsweise ist dabei von einem Sicherheitsstandpunkt die zweite Form von Authentifizierung stärker als die erste Form von Authentifizierung. Stärker bedeutet in diesem Zusammenhang beispielsweise, dass dann wenn die erste Form von Authentifizierung in einer PIN mit vier Ziffern besteht, die zweite Form von Authentifizierung aus einer PIN mit mehr als vier Ziffern besteht. Gemäß einer alternativen Ausführungsform erfordert die zweite Form von Authentifizierung, dass sich der Benutzer des mobilen Endgeräts gegenüber einem Cloud-Server authentifizieren muss, beispielsweise indem er eine PIN oder ein Passwort eingeben muss. Gemäß weiterer alternativer Ausführungsform kann die zweite Form von Authentifizierung vorsehen, dass sich der Benutzer dadurch authentifiziert, dass er den Besitz eines Hardware-Tokens nachweist, z.B. einer Smartcard.

Zum Erkennen des Neustarts des mobilen Endgeräts 20 gibt es mehrere Möglichkeiten. Die Softwareapplikation 32 kann selbst erkennen, wenn diese nach einem Neustart aufgerufen wird. Wie dies dem Fachmann bekannt ist, gibt es hierzu beispielsweise beim Android-Betriebssystem einen sogenannten Callback, der zwar bei jedem Neustart der Softwareapplikation 32 aufgerufen wird, was aber beim Android-Betriebssystem kaum vorkommt. Eine weitere Möglichkeit besteht darin, dass ein Broadcast-Mechanismus auf dem mobilen Endgerät 20 eingerichtet ist, der nach einem Neustart des mobilen Endgeräts 20 alle beim Broadcast-Mechanismus registrierten Applikationen über den Neustart des mobilen Endgeräts 20 informiert. Eine noch weitere Möglichkeit sieht vor, dass die Softwareapplikation 32 derart ausgestaltet ist, dass diese beim erstmaligen Starten der Softwareapplikation 32 einen Service startet, der im Betrieb des mobilen Endgeräts nie beendet wird. Falls die Softwareapplikation 32 erkennt, dass dieser Service nicht läuft, wird erfindungsgemäß die (vorzugsweise stärkere) zweite Form von Authentifizierung verlangt und anschließend der Service wieder gestartet. Andernfalls, falls die Softwareapplikation erkennt, dass der Service läuft, wird lediglich die (vorzugsweise schwächere) erste Form von Authentifizierung verlangt. Selbstverständlich lassen sich die vorstehend beschriebenen Möglichkeiten zum Erkennen eines Neustarts des mobilen Endgeräts 20 durch die Softwareapplikation 32 auch miteinander kombinieren.

## Patentansprüche

1. Verfahren zum Betreiben einer Computereinheit (20) mit einem Prozessor (24), auf dem eine Softwareapplikation (32) laufen kann, wobei das Verfahren die folgenden Schritte umfasst:
beim Aufrufen der Softwareapplikation (32) auf der Computereinheit (20) oder beim Durchführen einer Transaktion mit der Softwareapplikation, (32) den Schritt des Überprüfens, ob die Computereinheit (20) seit dem letzten Aufrufen der Softwareapplikation (32) neu gestartet worden ist;
das Durchführen einer ersten Form von Authentifizierung zum Starten der Softwareapplikation (32) oder zum Durchführen der Transaktion mit der Softwareapplikation (32), falls die Computereinheit (20) seit dem letzten Aufrufen der Softwareapplikation (32) nicht neu gestartet worden ist; und das Durchführen einer zweiten Form von Authentifizierung zum Starten der Softwareapplikation (32) oder zum Durchführen der Transaktion mit der Softwareapplikation (32), falls die Computereinheit (20) seit dem letzten Aufrufen der Softwareapplikation (32) neu gestartet worden ist,
**dadurch gekennzeichnet, dass**
überprüft wird, ob die Computereinheit (20) seit dem letzten Aufrufen der Softwareapplikation (32) neu gestartet worden ist, indem:
ein Broadcast-Mechanismus auf der Computereinheit (20) eingerichtet ist, der nach einem Neustart der Computereinheit (20) die beim Broadcast-Mechanismus registrierte Softwareapplikation (32) über den Neustart der Computereinheit (20) informiert; und/oder
die Softwareapplikation (32) derart ausgestaltet ist, dass diese beim erstmaligen Aufrufen der Softwareapplikation (32) einen Service startet, der im Betrieb des mobilen Endgeräts nie beendet wird, und dass überprüft werden kann, ob der Service läuft oder nicht.

2. Verfahren nach Anspruch 1, wobei von einem Sicherheitsstandpunkt die zweite Form von Authentifizierung stärker als die erste Form von Authentifizierung ist.

3. Verfahren nach Anspruch 1 oder 2, wobei die erste Form von Authentifizierung die Eingabe einer PIN oder eines Passwortes umfasst.

4. Verfahren nach einem der Ansprüche 1 bis 3, wobei die zweite Form von Authentifizierung eine Authentifizierung gegenüber einem Cloud-Server umfasst und/oder eine Authentifizierung mittels eines Hardware-Tokens, vorzugsweise einer Smart-Card, umfasst.

5. Softwareapplikation (32), die dazu ausgestaltet ist, auf dem Prozessor (24) einer Computereinheit (20) zu laufen, wobei die Softwareapplikation (20) ferner dazu ausgestaltet ist:
beim Aufrufen der Softwareapplikation (32) oder beim Durchführen einer Transaktion mit der Softwareapplikation (32) auf der Computereinheit (20) zu überprüfen, ob die Computereinheit (20) seit dem letzten Aufrufen der Softwareapplikation (32) neu gestartet worden ist;
eine erste Form von Authentifizierung zum Starten der Software-applikation (32) oder zum Durchführen der Transaktion mit der Software-applikation (32) zu verlangen, falls die Computereinheit (20) seit dem letzten Aufrufen der Softwareapplikation (32) nicht neu gestartet worden ist; und
eine zweite Form von Authentifizierung zum Starten der Software-applikation (32) oder zum Durchführen der Transaktion mit der Software-applikation (32) zu verlangen, falls die Computereinheit (20) seit dem letzten Aufrufen der Softwareapplikation (32) neu gestartet worden ist,
**dadurch gekennzeichnet, dass**
die Softwareapplikation (32) dazu ausgestaltet ist, beim Aufrufen der Softwareapplikation (32) auf der Computereinheit (20) zu überprüfen, ob die Computereinheit (20) seit dem letzten Aufrufen der Softwareapplikation (32) neu gestartet worden ist, indem:
ein Broadcast-Mechanismus auf der Computereinheit (20) eingerichtet ist, der nach einem Neustart der Computereinheit (20) die beim Broadcast-Mechanismus registrierte Softwareapplikation (32) über den Neustart der Computereinheit (20) informiert; und/oder
die Softwareapplikation (32) derart ausgestaltet ist, dass diese beim erstmaligen Aufrufen der Softwareapplikation (32) einen Service startet, der im Betrieb des mobilen Endgeräts nie beendet wird, und dass überprüft werden kann, ob der Service läuft oder nicht.

6. Softwareapplikation (32) nach Anspruch 5, wobei von einem Sicherheitsstandpunkt die zweite Form von Authentifizierung stärker als die erste Form von Authentifizierung ist.

7. Softwareapplikation (32) nach Anspruch 5 oder 6, wobei die erste Form von Authentifizierung die Eingabe einer PIN oder eines Passwortes umfasst.

8. Softwareapplikation (32) nach einem der Ansprüche 5 bis 7, wobei die zweite Form von Authentifizierung eine Authentifizierung gegenüber einem Cloud-Server umfasst und/oder eine Authentifizierung mittels eines Hardware-Tokens, vorzugsweise einer Smart-Card, umfasst.

9. Computereinheit (20), insbesondere mobiles Endgerät, vorzugsweise Smartphone, mit einem Prozessor (24), auf dem eine Softwareapplikation (32) nach einem der Ansprüche 5 bis 8 laufen kann, oder wobei die Computereinheit (20) dazu ausgestaltet ist, gemäß einem Verfahren nach einem der Ansprüche 1 bis 4 betrieben zu werden.

## Claims

1. A method for operating a computer unit (20) with a processor (24) on which a software application (32) can run, wherein the method comprises the following steps:
upon calling up the software application (32) on the computer unit (20) or upon carrying out a transaction with the software application (32), the step of checking whether the computer unit (20) has been re-started since the last calling up of the software application (32),
carrying out a first form of authentication for starting the software application (32) or for carrying out the transaction with the software application (32), if the computer unit (20) has not been re-started since the last calling up of the software application (32); and carrying out a second form of authentication for starting the software application (32) or for carrying out the transaction with the software application (32), if the computer unit (20) has been re-started since the last calling up of the software application (32),
**characterized in that**
it is checked whether the computer unit (20) has been re-started since the last calling up of the software application (32), by:
a broadcast mechanism being set up on the computer unit (20) which, after a re-start of the computer unit (20), informs the software application (32) registered at the broadcast mechanism about the re-start of the computer unit (20); and/or
the software application (32) is configured such that, upon calling up the software application (32) for the first time, said software application starts a service that will never be stopped during the operation of the mobile terminal and such that it can be checked whether the service is running or not.

2. The method according to claim 1, wherein, from a security viewpoint, the second form of authentication is stronger than the first form of authentication.

3. The method according to claim 1 or 2, wherein the first form of authentication comprises the inputting of a PIN or of a password.

4. The method according to any of claims 1 to 3, wherein the second form of authentication comprises an authentication vis-à-vis a cloud server and/or comprises an authentication by means of a hardware token, preferably a smart card.

5. A software application (32), which is adapted to run on the processor (24) of a computer unit (20), wherein the software application (20) is further configured to:
upon calling up the software application (32) or upon carrying out a transaction with the software application (32) on the computer unit (20), check whether the computer unit (20) has been re-started since the last calling up of the software application (32);
request a first form of authentication for starting the software application (32) or for carrying out the transaction with the software application (32), if the computer unit (20) has not been re-started since the last calling up of the software application (32); and
request a second form of authentication for starting the software application (32) or for carrying out the transaction with the software application (32), if the computer unit (20) has been re-started since the last calling up of the software application (32),
**characterized in that**
the software application (32), upon calling up the software application (32) on the computer unit (20), is configured to check whether the computer unit (20) has been re-started since the last calling up of the software application (32) by:
a broadcast mechanism being set up on the computer unit (20) which, after a re-start of the computer unit (20), informs the software application (32) registered at the broadcast mechanism about the re-start of the computer unit (20); and/or
the software application (32) is configured such that, upon calling up the software application (32) for the first time, said software application starts a service that will never be stopped during the operation of the mobile terminal and such that it can be checked whether the service is running or not.

6. The software application (32) according to claim 5, wherein from a security viewpoint, the second form of authentication is stronger than the first form of authentication.

7. The software application (32) according to claim 5 or 6, wherein the first form of authentication comprises the inputting of a PIN or of a password.

8. The software application (32) according to any of claims 5 to 7, wherein the second form of authentication comprises an authentication vis-à-vis a cloud server and/or comprises an authentication by means of a hardware token, preferably a smart card.

9. A computer unit (20), in particular a mobile terminal, preferably a smart phone, with a processor (24), on which a software application (32) according to any of claims 5 to 8 can run, or wherein the computer unit (20) is configured to be operated in accordance with a method according to any of claims 1 to 4.

## Revendications

1. Procédé de fonctionnement d'une unité d'ordinateur (20) ayant un processeur (24) sur lequel une application logicielle (32) peut être exécutée, cependant que le procédé comprend les étapes suivantes :
lors de l'appel de l'application logicielle (32) sur l'unité d'ordinateur (20) ou lors de la réalisation d'une transaction avec l'application logicielle (32), l'étape de la vérification si l'unité d'ordinateur (20) a été redémarrée depuis le dernier appel de l'application logicielle (32),
la réalisation d'une première forme d'authentification pour le démarrage de l'application logicielle (32) ou pour la réalisation de la transaction avec l'application logicielle (32) si l'unité d'ordinateur (20) n'a pas été redémarrée depuis le dernier appel de l'application logicielle (32); et
la réalisation d'une deuxième forme d'authentification pour le démarrage de l'application logicielle (32) ou pour la réalisation de la transaction avec l'application logicielle (32) si l'unité d'ordinateur (20) a été redémarrée depuis le dernier appel de l'application logicielle (32),
**caractérisé en ce que**
il est vérifié si l'unité d'ordinateur (20) a été redémarrée depuis le dernier appel de l'application logicielle (32), ce qui a lieu **en ce que** :
un mécanisme de diffusion est mis en place sur l'unité d'ordinateur (20), lequel, après un redémarrage de l'unité d'ordinateur (20), informe du redémarrage de l'unité d'ordinateur (20) l'application logicielle (32) enregistrée au mécanisme de diffusion ; et/ou
l'application logicielle (32) est configurée de telle façon que cette dernière, lors du premier appel de l'application logicielle (32), démarre un service qui ne prend jamais fin durant le fonctionnement du terminal mobile, et qu'il peut être vérifié si le service est en train d'être exécuté ou non.

2. Procédé selon la revendication 1, cependant que, d'un point de vue concernant la sécurité, la deuxième forme d'authentification est plus forte que la première forme d'authentification.

3. Procédé selon la revendication 1 ou 2, cependant que la première forme d'authentification comprend l'entrée d'un PIN ou d'un mot de passe.

4. Procédé selon une des revendications de 1 à 3, cependant que la deuxième forme d'authentification comprend une authentification vis-à-vis d'un serveur cloud et/ou une authentification au moyen d'un jeton matériel, de préférence une carte à puce.

5. Application logicielle (32) configurée pour être exécutée sur le processeur (24) d'une unité d'ordinateur (20), cependant que l'application logicielle (20) est en outre configurée pour :
lors de l'appel de l'application logicielle (32) ou lors de la réalisation d'une transaction avec l'application logicielle (32) sur l'unité d'ordinateur (20), vérifier si l'unité d'ordinateur (20) a été redémarrée depuis le dernier appel de l'application logicielle (32),
demander une première forme d'authentification pour le démarrage de l'application logicielle (32) ou pour la réalisation de la transaction avec l'application logicielle (32) si l'unité d'ordinateur (20) n'a pas été redémarrée depuis le dernier appel de l'application logicielle (32); et
demander une deuxième forme d'authentification pour le démarrage de l'application logicielle (32) ou pour la réalisation de la transaction avec l'application logicielle (32) si l'unité d'ordinateur (20) a été redémarrée depuis le dernier appel de l'application logicielle (32),
**caractérisé en ce que**
l'application logicielle (32) est configurée pour, lors de l'appel de l'application logicielle (32) sur l'unité d'ordinateur (20), vérifier si l'unité d'ordinateur (20) a été redémarrée depuis le dernier appel de l'application logicielle (32), ce qui a lieu **en ce que** :
un mécanisme de diffusion est mis en place sur l'unité d'ordinateur (20), lequel, après un redémarrage de l'unité d'ordinateur (20), informe du redémarrage de l'unité d'ordinateur (20) l'application logicielle (32) enregistrée au mécanisme de diffusion ; et/ou
l'application logicielle (32) est configurée de telle façon que cette dernière, lors du premier appel de l'application logicielle (32), démarre un service qui ne prend jamais fin durant le fonctionnement du terminal mobile, et qu'il peut être vérifié si le service est en train d'être exécuté ou non.

6. Application logicielle (32) selon la revendication 5, cependant que, d'un point de vue concernant la sécurité, la deuxième forme d'authentification est plus forte que la première forme d'authentification.

7. Application logicielle (32) selon la revendication 5 ou 6, cependant que la première forme d'authentification comprend l'entrée d'un PIN ou d'un mot de passe.

8. Application logicielle (32) selon une des revendications de 5 à 7, cependant que la deuxième forme d'authentification comprend une authentification vis-à-vis d'un serveur cloud et/ou une authentification au moyen d'un jeton matériel, de préférence une carte à puce.

9. Unité d'ordinateur (20), en particulier terminal mobile, de préférence smartphone, ayant un processeur (24) sur lequel une application logicielle (32) selon une des revendications de 5 à 8 peut être exécutée, ou cependant que l'unité d'ordinateur (20) est conçue pour fonctionner suivant un procédé selon une des revendications de 1 à 4.
